# FASCICULE DE BREVET EUROPEEN

(11) **EP 0 489 132 B1**
(45) Date de publication et mention de la délivrance du brevet: **20.07.1994**
(21) Numéro de dépôt: 91911015.5
(22) Date de dépôt: 26.06.1991
(51) Int. Cl.: G01D 5/20

(54) **CAPTEUR DE POSITION POUR DETERMINER LA POSITION ANGULAIRE D'UN ARBRE ROTATIF**
STELLUNGSGEBER ZUR ERFASSUNG DER WINKELPOSITION EINER ROTIERENDEN WELLE
POSITION SENSOR FOR DETERMINING THE ANGULAR POSITION OF A ROTATING SHAFT

(30) Priorité: 27.06.1990 CH 2141/90
(43) Date de publication de la demande: 10.06.1992
(73) Titulaire: BAUMER ELECTRIC AG, 8500 Frauenfeld (CH)
(72) Inventeur: BARROS, José, CH-1207 Genève (CH)
(74) Mandataire: Hranitzky, Wilhelm Max
(86) Numéro de dépôt international: CH9100141
(87) Numéro de publication internationale: WO9200505

(56) Documents cités:
- DE-C- 911 664
- US-A- 4 507 638
- Patent Abstracts of Japan, vol. 9, no. 255 (E-349), 12 October 1985 & JP-A-60 102 860

## Description

La présente invention concerne un capteur de position pour déterminer la position angulaire d'un arbre rotatif comprenant une bobine d'excitation pour créer un champ magnétique variable dans le temps, au moins une bobine captrice disposée à l'intérieur de la bobine d'excitation et un organe rotatif agencé de façon à moduler, en fonction de sa position angulaire, le champ magnétique traversant la bobine captrice.

On connait ce type de capteurs qui permettent de déduire la position angulaire d'un arbre à partir du signal recueilli aux bornes de la ou des bobines captrices. Toutefois dans les dispositifs connus l'amplitude de la variation du signal en fonction de la variation angulaire de l'arbre est relativement faible et la précision de la mesure est souvent insuffisante.

L'invention vise à fournir un capteur de position du type mentionné au début qui soit d'une structure simple, économique et compacte et qui produise un signal de position d'une amplitude relativement grande et d'une très bonne précision.

A cet effet, le capteur suivant l'invention présente un capteur de position du type susmentioné, avec en outre les particularités énnoncées dans la partie caractéristique de la revendication 1. Les revendications 2 à 5 décrivent des modes de réalisation préférés de l'invention.

Le but, les caractéristiques et les avantages de la présente invention seront mieux compris à la lumière de la description suivante concernant un exemple de réalisation du capteur selon l'invention, illustré dans le dessin annexé dans lequel :
la figure 1 est une coupe axiale d'un capteur de position selon l'invention, et
la figure 2 est une représentation schématisée illustrant le fonctionnement du capteur à travers différentes positions de l'organe rotatif.

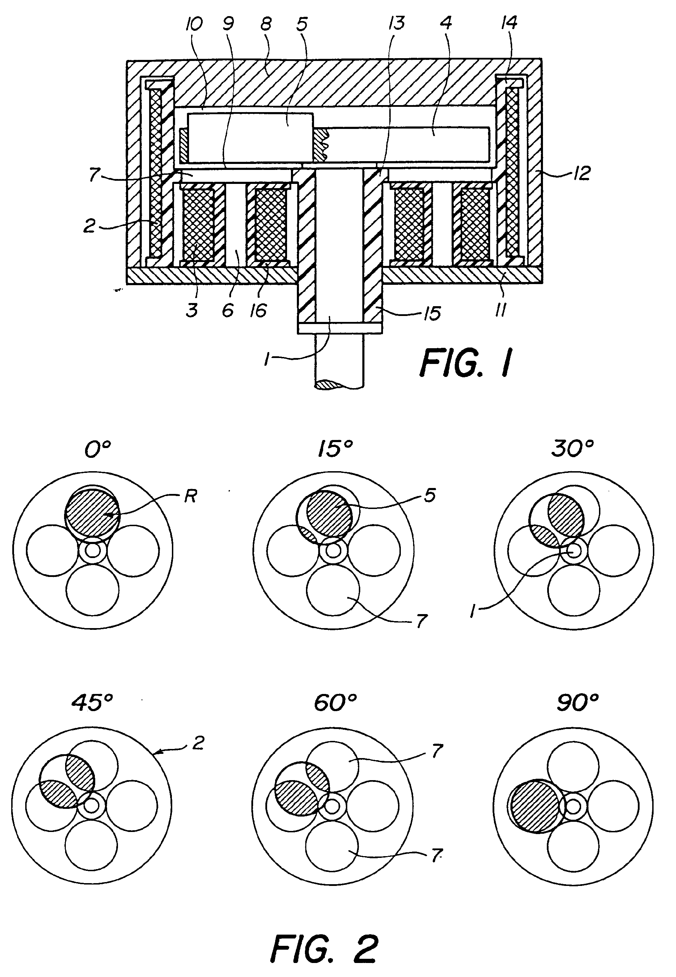

Le capteur de la figure 1 comporte un boîtier formé par une plaque de support 11 et une pièce de fermeture 12, réalisées en un matériau magnétiquement perméable. A l'intérieur de ce boîtier est disposée une pièce en matière plastique 13 formant notamment un corps de bobine 14 et une partie de palier 15 dans laquelle est logée l'extrémité d'un arbre rotatif 1. L'arbre 1 est solidaire d'un organe rotatif comprenant un support en forme de disque 4 et une pièce 5 telle qu'une pastille en ferrite dans le présent exemple.

Le corps de bobine 14 sert de support à l'enroulement 2 d'une bobine d'excitation cylindrique qui s'étend sur quasiment toute la hauteur de la pièce de fermeture 12. Sur la plaque de support 11 sont disposées, de façon symétrique, quatre bobines captrices formées chacune d'un enroulement 3, d'un corps de bobine 16 et d'un noyau 6 muni d'une partie polaire 7. Deux de ces bobines captrices sont montrées dans la coupe axiale de la figure 1.

Les parties polaires 7 ont, dans cet exemple, une forme circulaire et la pastille de ferrite 5 a également essentiellemnt la forme d'un cylindre circulaire. Le support 4 est de préférence réalisé en un matériau électriquement conducteur par exemple en aluminium. La pièce de fermeture 12 comporte une partie 8 qui est disposée en regard de l'organe rotatif et qui forme avec celui-ci un entrefer 10 alors qu'un entrefer 9 et formé entre l'organe rotatif et les parties polaires 7. Ces entrefers ont de préférence une hauteur minimale compte tenu des tolérances de fabrication qui doivent bien entendu permettre le mouvement de l'organe rotatif. Comme on le notera d'après la figure 1, non seulement l'entrefer 9 mais également l'entrefer 10 est situé sensiblement à l'intérieur de la bobine d'excitation 2 de sorte que le champ magnétique créé par un courant dans cette bobine d'excitation est sensiblement uniforme dans ces entrefers. Ce champ se ferme essentiellement par l'intermédiaire des noyaux 6, 7, la plaque de support 11 et la pièce de fermeture 12.

Lors d'une rotation de l'axe 1, le flux magnétique qui traverse les bobines captrices et qui, varie dans le temps comme le courant d'excitation dans la bobine 2, varie en amplitude dans chaque bobine en fonction de la position angulaire de la pastille 5 par rapport aux parties polaires respectives 7.

La figure 2 illustre différentes positions de l'organe rotatif par rapport aux parties polaires des quatre bobines captrices qui sont reliées, de manière connue, de façon que deux bobines diamètralement opposées forment les demies-phases d'une même phase. La forme et les dimensions des parties polaires et de la pastille 5 sont de préférence choisies de façon que la variation de l'amplitude du flux magnétique soit continue dans les deux bobines d'une même phase, autrement dit que lorsque la pastille 5 cesse de recouvrir (zone R) partiellement une partie polaire elle commence à recouvrir la partie polaire diamétralement opposée. Différentes caractéristiques de variations du flux en fonction de la position angulaire de l'organe rotatif peuvent être obtenues par les formes et les dimensions des parties en regard, cette variation pouvant être par exemple particulier sinusoïdale.

La modification du flux magnétique traversant les différentes bobines se traduit par une modulation correspondante de la tension induite dans les bobines captrices qui fournit le signal de mesure. Le support 4 de la pièce magnétiquement perméable 5 sera dans le présent cas le siège de courants de Foucault qui réduisent l'intensité du champ en dehors de la pièce 5 et accroissent par conséquent la différence entre les valeurs maximales et minimales de la tension induite dans les bobines captrices. Pour éviter que ces courants de Foucault se ferment également autour de la pastille 5, une fente peut être prévue dans le support 4 à un endroit de la périphérie de cette pièce entre celle-ci et le bord du support 4.

Le présent agencement du capteur de position conduit à une structure particulièrement compacte, réduit les pertes en énergie magnétique et permet d'obtenir un signal de sortie relativement élevé. D'autre part, la précision d'un tel capteur est très bonne du fait de l'uniformité du champ magnétique et de la relative insensibilité aux tolérances de fabrication. Il est à noter que les entrefers 9 et 10 s'ajoutent et leurs écarts individuels n'ont pratiquement pas d'incidence sur la mesure. Comme le montre la figure 1, le volume du capteur est utilisé de façon optimale pour accueillir le plus grand volume d'éléments actifs.

Il est à noter qu'en dehors d'une modulation du flux par une pièce telle que 5 qui augmente le flux dans la zone qu'elle recouvre, il est également possible de prévoir par exemple une ou plusieurs spires de bobines, conductrices d'électricité, pour au contraire réduire le champ traversant cette zone. D'autres formes d'exécution sont également accessibles à l'homme de métier dans le cadre de la présente invention.

## Revendications

1. Capteur de position pour déterminer la position angulaire d'un arbre rotatif (1), comprenant une bobine d'excitation (2) pour créer un champ magnétique variable dans le temps, au moins une bobine captrice (3) disposée à l'intérieur de la bobine d'excitation, et un organe rotatif (4,5), solidaire dudit arbre et agencé de façon à moduler, en fonction de sa position angulaire, le flux magnétique traversant la ou chaque bobine captrice, caractérisé en ce que la ou chaque bobine captrice comporte un noyau magnétiquement perméable (6) présentant une partie polaire (7) disposée en regard de l'organe rotatif, et qu'au moins une partie (8) d'une pièce de fermeture (12), magnétiquement perméable, est disposée en regard de l'organe rotatif du côté opposé à ladite partie polaire, l'agencement étant tel que les entrefers (9,10) formés entre ladite partie polaire et l'organe rotatif, d'une part, et ladite partie de la pièce de fermeture et l'organe rotatif, d'autre part, soient entièrement situés sensiblement à l'intérieur de la bobine d'excitation (2).

2. Capteur selon la revendication 1, caractérisé en ce que la hauteur des dits entrefers a une valeur minimale, compte tenu des tolérances de fabrication.

3. Capteur selon l'une des revendications précédentes, caractérisé en ce que l'organe rotatif comporte une pièce en matière magnétiquement perméable (5) dans un support non-magnétique (4).

4. Capteur selon la revendication 3, caractérisé en ce que le support (4) est en une matière électriquement conductrice.

5. Capteur selon la revendication 4, caractérisé en ce que le support (4) présente une discontinuité électrique à au moins un endroit de la périphérie de la pièce perméable de l'organe rotatif.

## Patentansprüche

1. Stellungsgeber zur Erfassung der Winkelstellung einer rotierenden Welle (1), der eine Erregerspule (2) zur Erzeugung eines zeitlich veränderlichen Magnetfeldes aufweist, mindestens eine im Inneren der Erregerspule angeordnete Empfängerspule (3) und ein Drehteil (4, 5), welches fest mit der genannten Welle verbunden und so ausgebildet ist, dass es den die Empfängerspule oder jede Empfängerspule durchsetzenden magnetischen Fluss in Abhängigkeit von seiner Winkelstellung moduliert, dadurch gekennzeichnet, dass die Empfängerspule oder jede Empfängerspule einen magnetisch permeablen Kern (6) aufweist, der ein gegenüber dem Drehteil angeordnetes Polteil (7) besitzt, und dass mindestens ein Teil (8) eines magnetisch permeablen Schliessungsteils (12) gegenüber dem Drehteil auf der zu dem genannten Polteil entgegengesetzten Seite angeordnet ist, wobei die Anordnung derart getroffen ist, dass die Luftspalte (9, 10), welche einerseits zwischen dem genannten Polteil und dem Drehteil und andererseits zwischen dem genannten Teil des Schliessungsteils und dem Drehteil gebildet werden, zur Gänze im wesentlichen im Inneren der Erregerspule (2) gelegen sind.

2. Stellungsgeber nach Patentanspruch 1, dadurch gekennzeichnet, dass die Höhe der genannten Luftspalte einen minimalen Wert hat unter Berücksichtigung der Herstellungstoleranzen.

3. Stellungsgeber nach einem der vorhergehenden Patentansprüche, dadurch gekennzeichnet, dass das Drehteil ein Teil aus magnetisch permeablem Material (5) in einem nicht magnetischen Träger (4) aufweist.

4. Stellungsgeber nach Patentanspruch 3, dadurch gekennzeichnet, dass der Träger (4) aus einem elektrisch leitenden Material ist.

5. Stellungsgeber nach Patentanspruch 4, dadurch gekennzeichnet, dass der Träger (4) eine elektrische Diskontinuität an mindestens einer Stelle des Umfangs des permeablen Teils des Drehteils aufweist.

## Claims

1. Position sensor for determining the angular position of a rotating shaft (1), comprising an energizing coil (2) for creating a time-variable magnetic field, at least one sensing coil (3) arranged inside the energizing coil, and a rotatable member (4, 5) integral with said shaft and arranged so as to modulate the magnetic flux crossing the sensing coil or each sensing coil as a function of its angular position, characterized in that the sensing coil or each sensing coil comprises a magnetically permeable core (6) having a polar part (7) arranged opposite the rotatable member, and in that at least a part (8) of a magnetically permeable closing member (12) is arranged opposite the rotatable member at the opposite side of said polar part, the arrangement being such that the air-gaps (9, 10) formed between said polar part and the rotatable member, on the one hand, and said part of the closing member and the rotatable member, on the other hand, are entirely placed substantially inside the energizing coil (2).

2. Sensor according to claim 1, characterized in that the height of said air-gaps has a minimum value taking into account the manufacturing tolerances.

3. Sensor according to one of the preceding claims, characterized in that the rotatable member comprises a piece of magnetically permeable material (5) in a non-magnetic support (4).

4. Sensor according to claim 3, characterized in that the support (4) is in an electrically conductive material.

5. Sensor according to claim 4, characterized in that the support (4) has an electric discontinuity at at least one location of the periphery of the permeable piece of the rotatable member.
